# EUROPEAN PATENT SPECIFICATION

(11) **EP 1 552 753 B1**
(45) Date of publication and mention of the grant of the patent: **29.11.2006**
(21) Application number: 02741502.5
(22) Date of filing: 19.06.2002
(51) Int. Cl.: A23J 3/16, A23J 3/34

(54) **PRODUCTION AND USE OF SOY PROTEIN HYDROLYSATES ENRICHED WITH BRANCHED AMINO ACIDS**
HERSTELLUNG UND VERWENDUNG VON MIT VERZWEIGTEN AMINOSÄUREN ANGEREICHERTEN SOJAPROTEINHYDROLYSATEN
PRODUCTION ET UTILISATION D'HYDROLYSATS PROTEIQUES DE SOJA ENRICHIS EN ACIDES AMINES RAMIFIES

(43) Date of publication of application: 13.07.2005
(73) Proprietor: Centro de Investigacion en Alimentacion y Desarrollo, A.C., Hermosillo, Sonora 8300 (MX)
(72) Inventor: CALDERON DE LA BARCA COTA, Ana Maria, Hermosillo, Sonora 83000 (MX); RODRIGUEZ HERNANDEZ, Maria Fátima, Hermosillo, Sonora 83000 (MX)
(74) Representative: Zardi, Marco
(86) International application number: PCT/MX2002/000053
(87) International publication number: WO 2004/000033

(56) References cited:
- CALDERON DE LA BARCA A.M. ET AL: 'Enzymatic hydrolysis and synthesis of soy protein to improve its amino acid composition and functional properties' JOURNAL OF FOOD SCIENCE vol. 65, no. 2, March 2000, pages 246 - 253, XP002976863
- DATABASE WPI Week 199633, Derwent Publications Ltd., London, GB; AN 1996-328158, XP002976862 & JP 8 149 954 A (SNOW BRAND MILK PROD CO LTD) 11 June 1996

## Description

### BACKGROUND

### Technical field

The present invention relates to soy protein hydrolysates enriched with branehed-chain amino acids, preparation and use. In particular, its use for the nutritional treatment of hepatic cirrhosis and metabolic stress.

### Description of the prior art

Impairment of the liver function results in a variety of metabolic, hormonal and nutritional disorders which are reflected in amino acid and protein metabolism. Low plasma concentration of branched-chain aminoacids (BCAA: valine, isoleucine and leucine) and elevated concentrations of aromatic amino acids (AAA: phenylalanine, tyrosine and tryptophan) are frequently seen in patients with cirrhosis, irrespective of its etiology. Due to the basic function of the liver in the metabolism of all nutrients, diseases affecting this organ have very negative effects on the nutritional status of the patients. Therefore, anorexia, high energetic expenditure and problems of absorption and digestion, are common in cirrhotic patients. Besides to such increased requirements of energy, a higher than normal supply of dietary proteins is needed by cirrhotics in order to achieve nitrogen balance. BCAA are preferred to fulfill such requirements.

Proteins with high concentration of branched-chain amino acids (BCAA) are required for treatment of pathologies such as hepatic cirrhosis and metabolic stress. That because the fact BCAA has a higher- energy efficacy than that of glucose or fatty acids. Additionally, BCAA supplement may be considered to provide the necessary nitrogen intake without detrimental effects on the mental state, even improving it.

Because this kind of proteins do not naturally exist, formulas with free amino acids or milk proteins plus free amino acids containing 30 to 50% of BCAA are commercially produced, for example. Hepatamine®, Generaid®, Hepatic Aid II® and Travasorb®. These formulas present some drawback, for example high osmolality (>300 mOsm), poor sensorial and functional properties and high costs. Moreover, the amino acid profile of products such as Hepetic Aid seems unacceptable to support long term feeding treatments. Additionally, dietary free amino acids are not efficiently absorbed, especially during metabolic stress.

Therefore, an alternative nitrogen source for clinical formulas used for the nutritional treatment of hepatic cirrhosis or metabolic stress is widely needed. Such source must have optimum functional properties, especially solubility, and contain at least 30% of BCAA with a high potential for intestinal absorption.

According to the food technology information currently available, controlled enzymatic hydrolysis produces peptides with better functional properties than their original protein source. It is also well documented that amino acids from peptides are better absorbed than free amino acids or than amino acids from whole proteins. In addition, amino acids can be covalently bound to peptides in order to model any amino acid profile for any particular nutritional requirement However, up to now, any hydrolysate alone or synthesized has been disclosed for the nutritional treatment of cirrhosis or metabolic stress.

A previous study by Calderón de la Barca et aL J. Food Sci. 2000; 65(2):246-253, describes a soy protein hydrolysate with methionine covalently bound. The former study suggest such protein hydrolysate for nutritional formulations of elderly and patients with impaired gastrointestinal absorption; and for sporting or hypoallergenic formulas. There is no published information about the binding of BCAA to soy proteins for nutrional treatment of cirrhotic or metabolic stress patients, in the cited study neither any prior art.

### SUMMARY OF THE INVENTION

An object of the invention is to provide a source of nitrogen with therapeutic effect, in order to be included in nutritional formulas for cirrhotics and patients in metabolic stress.

Other object of the invention is to provide a protein composition specially designed to supply the amino acids requirements for nutritional support of cirrhotic or metabolic stress patients.

Other object of the invention is to provide an ingredient for nutritional formulas with suitable functional and sensorial properties, low osmolality and competitive cost.

Another object of the invention is to provide a protein ingredient for a soluble nutritional formula suitable for enteral or parenteral feeding.

Still other object of the invention is to provide a protein ingredient for a nutritional formula with amino acids which are better absorbed at intestine that free amino acids or amino acids from whole proteins.

Other object of the invention is to provide a protein ingredient for a long-term nutritional treatment for patients with hepatic diseases.

A further object of the invention is to provide a method to increase the low plasma BCAA levels of the cirrhotic patients

Other object of the present invention is to provide a method for the preparation of soy protein hydrolysates enriched with BCAA.

The objects of the present invention are fulfilled by the subject-matter as claimed, i.e by providing soy protein hydrolysates enriched with BCAA. Such soy protein hydrolyzates enriched with branched-chain amino acids (BCAA), are prepared by enzymatic hydrolysis of soy protein and its enzymatic enrichment with BCAA.

Further scope of applicability of the present invention will become apparent from the detailed description given hereinafter.

### DESCRIPTION

According to food technology information currently available, controlled enzymatic hydrolysis produces peptides with better functional properties than their original protein source. Enzymatic synthesis of amino acids is a well-known process since long ago, but currently it is under-utilized by the food industry, particularly for applications in formulas used in clinical nutrition.

The product obtained under the conditions described herein is a good nitrogen source with positive therapeutical effects and good functional properties. It can be used as an ingredient in nutritional formulas for cirrhotic and metabolic stress patients since its characteristics are appropriate for special formulations with the required functional and sensorial properties, low osmolality and low cost.

The present invention provides a protein composition specially designed to supply the amino acids requirements for nutritional support of cirrhotic or metabolic stress patients. The modified protein designed is soluble in liquid formulas for enteral or parenteral feeding.

Additionally, because soy protein naturally contains about 17% BCAA, is an ideal protein source for modification. Thus, our objective was to enzymatically modify soy protein by binding of BCAA, applying the proper reaction conditions.

The enzymatically modified soy protein hydrolysates described in this invention are particularly beneficial because the branched-chain amino acids required for the described pathologies are covalently bound when compared to the protein source found in commercial formulas used for the treatment of cirrhosis or metabolic stress, hydrolysates prepared by our process significantly improve the functional properties of the formulations. Amino acids from hydrolysates are better absorbed at intestine that these free-added to commercial formulas. An additional benefit is that the amino acid profiles in our formula contain not only the required BCAA for patients but all the essential ones for a nutritional long term treatment, which is a limiting factor in the currently available commercial formulas.

The protein source designed in this invention can prevent the bad functionality of the final formulation due to the poor solubility, also avoiding bad aroma and bitterness so common in commercial formulas containing free amino acids or peptides. Additionally, the amino acid absorption is increased because the protein of the invention is predigested and able for absorption along the intestine. The high BCAA content of our modified protein allows it to be added in high concentration to the formulas to supply the energetic need for muscle catabolism and provide nitrogen enough to the other body organs. This allows the low plasma BCAA levels of the cirrhotic patients to be increased to the ideal concentrations.

The production of soy protein hydrolyzates enriched with branched-chain amino acids (BCAA), is carried out by enzymatic hydrolysis of soy protein and its enzymatic enrichment with BCAA. The process is designed-to obtain a protein ingredient with a ratio of at least BCAA to aromatic amino acids (AAA) of 3 to 1; an ideal ratio of valine: isoleucine: leucine from 1:1:2 to about 1,5:1:2,5, and a BCAA proportion of 30 to 50% of the total amino acids.

For the soy protein hydrolysis, the protein source is 46% (w/v) soy flour or commercial soy isolate, 4% (w/w) enzyme extract of porcine pancreas with trypsin and chymotrypsin activities of 10-20 x 10⁻³ and 3-6 x 10-3 µg p-nitroanilide/min/mg protein or its equivalents of commercial trypsin and chymotrypsin. The reaction solvent is distilled water in a mixture maintained at pH 8 and 50 °C for 6 h under continuous stirring, and then inactivated by immersion in a water bath at 85 °C for 30 min. After cooling, centrifugation is applied for 15 min at 10 °C and 1500 rpm. The supernatant is spray dried using an inlet temperature of 200 °C and an outlet temperature of 90 °C. After drying, BCAA enrichment is carried out as described above.

The BCAA enrichment of soy protein hydrolysate is carried out by reaction of valine methyl-ester, leucine methyl-ester, chymotrypsin, soy protein hydrolysate, glycerol and distilled water. The enzyme: hydrolysate rate is 1:100 (w/w) and 3 M glycerol, 0,205 g valine methyl-ester and 0,09 g leucine methyl-ester per g of hydrolysate. The reaction is continuously stirred for 3 h at 37 °C and pH 7. At the end of the synthesis process the enzyme is inactivated by immersion in a water bath at 85 °C for 15 min.

According to the present invention, free amino acids and other low molecular weight compounds are removed by ultrafiltration or nanofiltration on spiral or flat membranes with cutoff of 0,5 or 1 kDa. The synthesis product is ultrafiltered to remove free amino acids and peptides which size is lower than 1 kDa. The permeate is discarded and the retentate is diafiltered using twice its volume. Finally, the BCAA enriched hydrolysate is spray-dried or freeze-dried.

The above reaction conditions provide a final product with a maximum degree of hydrolysis of 30%, containing 80% polypeptides between 1 and 12 kDa.

The solubility of the product obtained at pH 7 is 80 %. This product presents a bitterness score between light and low, according to a sensory evaluation panel using an intervals test in a non-structured continous scale. In this test, the extreme bitterness control corresponded to a 1% caffeine solution while the light bitterness control to a 0,03%.

The digestibility of the product was evaluated through a bioassay using cirrhotic rats kept in metabolic cages and fed two formulations. One formulation contained 9% of the BCAA enriched product, while the other contained 9%-of a similar commercial product. Measurements of nitrogen balance protein efficiency and ratio of posprandial plasmatic amino acids, were significantly better in the rats fed the first formulation.

The use of BCAA also has special advantages for the treatment of hepatic encephalopathy specially if combined with other therapies. BCAA can reduce protein catabolism, increase the synthesis of muscle and liver proteins and provide energy for the muscle tissue. Additionally, the use of dietary BCAA can reduce total ammonia and improve nitrogen balance, a key factor in liver and metabolic stress diseases.

In conclusion, the amino acid profile of the soy protein hydrolysates modified with BCAA in this invention, is designed for supplying the adequate protein requirements and correct nitrogen metabolism of the cirrhotic or stress metabolic patients.

The table shown below is an example of the soy protein hydrolysates modified with BCAA composition in accordance with the present invention:

| **Amino add in modified hydrolysate** | **Content (%)** |
|---|---|
| Aspartic acid | 14,4 |
| Glutamic acid | 20,5 |
| Serine | 2,0 |
| Histidine | 2,1 |
| Glycine | 5,0 |
| Threonine | 3,2 |
| Arginine | 5,8 |
| Alanine | 4,2 |
| Tyrosine | 1,9 |
| Methionine | 1,5 |
| Cysteine | 1,2 |
| Valine (Val) | 10,8 |
| Phenylalanine | 5,2 |
| Isoleucine (Ile) | 6,9 |
| Leucine (Leu) | 15,4 |
| Lysine | 4,6 |
| BCAA | 33,1 |
| AAA | 7,1 |
| **ECAA:AAA ratio** | **4,7** |
| **Val:Ile:Len ratio** | **1,5:1:2,2** |

| | |
|---|---|
| BCAA, branched-chain amino acids. AAA, aromatic amino acids | |

Also by way of example, and not limitation, results of the bioassay for nitrogen balance and protein efficiency, as welt as post-prandial plasma amino acids from the evaluation in an animal model of cirrhosis fed with the modified soy protein hydrolysate are given below. Given values of a commercial product (Hepatic Aid II) and casein were taken in the same experiment than those of the modified protein.

| **Indicators** | **Modified hydrolysate (n=8)** | **Hepatic Aid (n=8)** | **Casein (n=8)** |
|---|---|---|---|
| N intake (g) | 1,76±0,35^{ab} | 1,46 ± 0,20^{a} | 2,06 ± 0,11^{b} |
| N fecal (g) | 0,28 ± 0,04^{a} | 0,17 ± 0,03^{b} | 0,23 ± 0,04^{a} |
| N urinary (g) | 1,30 ± 0,12^{a} | 1,63 ± 0,18^{b} | 1,79 ± 0,33^{b} |
| Nitrogen balance (g) | 0,19 ± 0,31^{a} | -0,34 ± 0.20^{b} | 0,04 ± 0,38^{ab} |
| Weight change/protein intake | 1,33 ± 1,43^{a} | -0,34 ± 1,11^{b} | 0,20 ± 0,93^{ab} |

| | | | |
|---|---|---|---|
| ^{a, b, c} Mean with different exponent in the same row are significantly different (p<0.05) | | | |

| **Plasma post-prandial amino acid (µmoles/L)** | **Modified hydrolysate (n=8)** | **Hepatic Aid (n=8)** | **Casein (n=8)** |
|---|---|---|---|
| Aspartic acid | 16,3 ± 2,0^{a} | 8,6 ± 0,2^{b} | 10,6 ± 2,0^{b} |
| Glutamic acid | 86,1 ± 36,4^{a} | 69,0 ± 4,6^{a} | 154,6 ± 3,3^{b} |
| Asparagine | 50,4 ± 19.4^{ab} | 33,2 ± 14,9^{a} | 63,5 ± 24,7^{b} |
| Serine | 473,7 ± 36,4^{a} | 339,4 ± 29,1^{b} | 430,0 ± 24,4^{c} |
| Histidine | 849,8 ± 18,3^{a} | 655,7 ± 22,2^{b} | 750,5 ± 38,2^{c} |
| Alanine | 237,7 ± 27,6^{a} | 326,8 ± 40,9^{b} | 191,1 ± 27,7^{a} |
| Tyrosine | 91,2 ± 8,9^{a} | 103,9 ± 9,5^{a,b} | 122,1 ± 8,8^{b} |
| Methionine | 65,9 ± 7,2^{a} | 65,3 ± 4,4^{a} | 94,9 ± 4,0^{b} |
| Tryptophan | 59,1 ± 13,1^{a} | 42,5 ± 11,7^{b} | 31,3 ± 8,3^{b} |
| Valine | 166,3 ± 14,4^{a} | 95,8 ± 4,6^{b} | 94,1 ± 4,4^{b} |
| Phenylalanine | 51,2 ± 4,6^{a} | 42,7 ± 4,5^{a} | 77,9 ± 1,8^{b} |
| Isoleucine | 58,5 ± 2,1^{a} | 50,9 ± 3,2^{b} | 46,3 ± 2,4^{c} |
| Leucine | 138,5 ± 13,5^{a} | 99,5 ± 2,8^{b} | 44,4 ± 2,4^{c} |
| Lysine | 465,9 ± 31,5^{a} | 606,4 ± 44,6^{b} | 636,5 ± 58,5^{b} |
| BCAA | 363,2 ± 13,6^{a} | 246,2 ± 3,6^{b} | 184,5 ± 4,9^{c} |
| AAA | 201,5 ± 13,1^{a} | 189,2 ± 7,9^{a} | 231,4 ± 8,4^{b} |
| BCAA:AAA | 1,8 ± 0,3^{a} | 1,3 ± 0,1^{b} | 0,8 ± 0,0^{c} |

| | | | |
|---|---|---|---|
| ^{a,b,c} Mean with different exponent in the same row are significantly different (p<0.05) BCAA, branched-chain amino acids, AAA, aromatic amino acids. | | | |

It will be understood that various changes and modifications to the presently preferred embodiments described herein will be apparent to those skilled in the art.

## Claims

1. Enzymatically modified soy protein hydrolysates with covalently bound branched chain amino acids.

2. The enzymatically modified soy protein hydrolysates with covalently bound branched chain amino acids according to claim 1, wherein said branched chain amino acids are obtained from valise methyl ester and leucine methyl ester.

3. The enzymatically modified soy protein hydrolysates with covalently bound branched chain amino acids according to claim 2, wherein the hydrolysate comprises a ratio valine:isoleucine:luecine from 1:1:2 to 1,5:1:2,5.

4. The enzymatically modified soy protein hydrolysates with covalently bound branched chain amino acids according to claim 1 wherein the hydrolysate comprises a ratio of Branched Chain amino acids to Aromatic amino acid of at least 3:1.

5. The enzymatically modified soy protein hydrolysates with covalently bound branched chain amino acids according to claim 1 wherein the hydrolysate comprises from 30% to 50% of branched chain amino acids based on the total amino acids.

6. The enzymatically modified soy protein hydrolysates with covalently bound branched chain amino acids according to claim 1 wherein the solubility at pH 7 is about 80%.

7. A process for preparing an enzymatically modified soy protein hydrolysates with covalently-bound blanched chain amino acids comprising (a) a partial hydrolysis of soy-protein with proteases; (b) inactivation of enzymes and drying; (c) reaction of the hydrolysate with methyl-esters of the branched chain amino acids in aqueous phase in presence of a water activity inhibitor, (d) catalyzing the reaction with the same proteases in kinetically controlled conditions; (e) ending the reaction by thermal inactivation of the enzymes; (f) removing free amino acids and other low molecular weight compounds and g) spray drying.

8. The process according to claim 7, **characterized in that** the hydrolysis is performed by using of porcine pancreas proteases.

9. The process according to claim 8, **characterized in that** the concentration of porcine pancreas proteases is about 4% (w/v).

10. The process according to claim 8, **characterized in that** the porcine pancreas proteases comprise a trypsin activity from 10 to 20x10⁻³ µg p-nitroanilide/min/mg protein and chymotrypsin activity from 3 to 6x10⁻³ µg p-nitroanilide/min/mg protein.

11. The process according to claim 8, wherein the soy protein hydrolysis is performed at pH 8 and 50°C for 6 hours under continuous stirring.

12. The process according to claim 8, wherein the reaction of the hydrolysates with the methyl-esters of the branched chain amino acids is performed at pH 7 and 37°C for 3 hours.

13. The use of enzymatically modified soy protein hydrolysates with covalently bound branched chain amino acids, for the manufacture of a formula to be included as nitrogen source of enteral and parenteral formulas for nutritional support of humans.

14. The use of enzymatically modified soy protein hydrolysates with covalently bound branched chain amino acids, for the manufacture of a formula to be included as nitrogen source of enteral and parenteral formulas for nutritional support of cirrhotics and metabolic stress patients.

15. The use of enzymatically modified soy protein hydrolysates with covalently bound branched chain amino acids, for the manufacture of a formula to be included as nitrogen source of enteral and parenteral formulas for nutritional support of patients with hepatic encephalopathy.

16. The use of enzymatically modified soy protein hydrolysates with covalently bound branched chain amino acids, to manufacture a formula for the re-establishment of the ratio BCAA:AAA (3:1) in the plasma.

## Patentansprüche

1. Enzymatisch modifizierte Sojaproteinhydrolysate mit kovalent gebundenen, verzweigten Aminosäureketten.

2. Enzymatisch modifizierte Sojaproteinhydrolysate mit kovalent gebundenen, verzweigten Aminosäureketten nach Anspruch 1, wobei die verzweigten Aminosäureketten aus Valinmethylester und Leucinmethylester gewonnen werden.

3. Enzymatisch modifizierte Sojaproteinhydrolysate mit kovalent gebundenen, verzweigten Aminosäureketten nach Anspruch 2, wobei das Hydrolysat Valin, Isoleucin und Leucin im Verhältnis von 1:1:2 bis 1,5:1:2,5 umfasst.

4. Enzymatisch modifizierte Sojaproteinhydrolysate mit kovalent gebundenen, verzweigten Aminosäureketten nach Anspruch 1, wobei das Hydrolysat verzweigte Aminosäureketten und aromatische Aminosäuren im Verhältnis von mindestens 3:1 umfasst.

5. Enzymatisch modifizierte Sojaproteinhydrolysate mit kovalent gebundenen, verzweigten Aminosäureketten nach Anspruch 1, wobei das Hydrolysat 30% bis 50% verzweigte Aminosäureketten basierend auf dem Gesamtgehalt an Aminosäuren umfasst.

6. Enzymatisch modifizierte Sojaproteinhydrolysate mit kovalent gebundenen, verzweigten Aminosäureketten nach Anspruch 1, wobei die Löslichkeit bei einem pH-Wert von 7 ca. 80% beträgt.

7. Verfahren zur Herstellung von enzymatisch modifizierten Sojaproteinhydrolysaten mit kovalent gebundenen, verzweigten Aminosäureketten, welches umfasst: (a) die teilweise Hydrolyse von Sojaprotein mit Proteasen; (b) die Inaktivierung von Enzymen und Trocknung; (c) die Reaktion des Hydrolysats mit Methylestern der verzweigten Aminosäureketten in wässriger Phase und im Beisein eines Wasseraktivitätsinhibitors; (d) die katalytische Beeinflussung der Reaktion mit den Proteasen unter kinetisch gesteuerten Bedingungen; (e) das Beenden der Reaktion durch thermische Inaktivierung der Enzyme; (f) das Abziehen freier Aminosäuren und anderer Verbindungen mit niedrigem Molekulargewicht; und (g) Sprühtrocknung.

8. Verfahren nach Anspruch 7, **dadurch gekennzeichnet, dass** die Hydrolyse unter Verwendung von vom Schwein stammenden Pankreasproteasen durchgeführt wird.

9. Verfahren nach Anspruch 8, **dadurch gekennzeichnet, dass** die Konzentration von vom Schwein stammenden Pankreasproteasen ca. 4% (w/v) beträgt.

10. Verfahren nach Anspruch 8, **dadurch gekennzeichnet, dass** die vom Schwein stammenden Pankreasproteasen eine Trypsin-Aktivität von 10 bis 20 * 10⁻³ µg p-Nitroanilid/min/mg Protein und eine Chymotrypsin-Aktivität von 3 bis 6 * 10⁻³ µg p-Nitroanilid/min/mg Protein haben.

11. Verfahren nach Anspruch 8, wobei die Sojaproteinhydrolyse bei einem pH-Wert von 8 unter kontinuierlichem Rühren 6 Stunden lang bei 50°C durchgeführt wird.

12. Verfahren nach Anspruch 8, wobei die Reaktion der Hydrolysate mit den Methylestern der verzweigten Aminosäureketten bei einem pH-Wert von 7 für 3 Stunden bei 37°C durchgeführt wird.

13. Verwendung von enzymatisch modifizierten Sojaproteinhydrolysaten mit kovalent gebundenen, verzweigten Aminosäureketten zur Herstellung einer Formulierung, die als Stickstoffquelle in enteralen und parenteralen Formulierungen zur Ernährungsunterstützung von Menschen enthalten sein soll.

14. Verwendung von enzymatisch modifizierten Sojaproteinhydrolysaten mit kovalent gebundenen, verzweigten Aminosäureketten zur Herstellung einer Formulierung, die als Stickstoffquelle in enteralen und parenteralen Formulierungen zur Ernährungsunterstützung von zirrhotischen und metabolisch belasteten Patienten enthalten sein soll.

15. Verwendung von enzymatisch modifizierten Sojaproteinhydrolysaten mit kovalent gebundenen, verzweigten Aminosäureketten zur Herstellung einer Formulierung, die als Stickstoffquelle in enteralen und parenteralen Formulierungen zur Ernährungsunterstützung von Patienten mit hepatischer Enzephalopathie enthalten sein soll.

16. Verwendung von enzymatisch modifizierten Sojaproteinhydrolysaten mit kovalent gebundenen, verzweigten Aminosäureketten zur Herstellung einer Formulierung zur Wiederherstellung eines Verhältnisses von BCAA:AAA im Plasma von 3:1.

## Revendications

1. Hydrolysats de protéine de soja modifiés par voie enzymatique comportant des aminoacides à chaîne ramifiée liés par covalence.

2. Les hydrolysats de protéine de soja modifiés par voie enzymatique comportant des aminoacides à chaîne ramifiée liés par covalence selon la revendication 1, dans lesquels lesdits aminoacides à chaîne ramifiée sont obtenus à partir de l'ester méthylique de la valine et de l'ester méthylique de la leucine.

3. Les hydrolysats de protéine de soja modifiés par voie enzymatique comportant des aminoacides à chaîne ramifiée liés par covalence selon la revendication 2, dans lesquels l'hydrolysat comprend un rapport valine : isoleucine : leucine de 1:1:2 à 1,5:1:2,5.

4. Les hydrolysats de protéine de soja modifiés par voie enzymatique comportant des aminoacides à chaîne ramifiée liés par covalence selon la revendication 1, dans lesquels l'hydrolysat comprend un rapport entre aminoacides à chaîne ramifiée et aminoacides aromatiques, d'au moins 3:1.

5. Les hydrolysats de protéine de soja modifiés par voie enzymatique comportant des aminoacides à chaîne ramifiée liés par covalence selon la revendication 1, dans lesquels l'hydrolysat comprend de 30 % à 50 % d'aminoacides à chaîne ramifiée par rapport aux aminoacides totaux.

6. Les hydrolysats de protéine de soja modifiés par voie enzymatique comportant des aminoacides à chaîne ramifiée liés par covalence selon la revendication 1, dans lesquels la solubilité à un pH de 7 est d'environ 80 %.

7. Procédé de préparation d'hydrolysats de protéine de soja modifiés par voie enzymatique comportant des aminoacides à chaîne ramifiée liés par covalence, comprenant (a) une hydrolyse partielle de protéine de soja avec des protéases ; (b) une inactivation des enzymes et un séchage ; (c) une réaction de l'hydrolysat avec les esters méthyliques des aminoacides à chaîne ramifiée en phase aqueuse en présence d'un inhibiteur d'activité de l'eau ; (d) une catalyse de la réaction avec les mêmes protéases dans des conditions cinétiquement contrôlées ; (e) un arrêt de la réaction par inactivation thermique des enzymes ; (f) une élimination des aminoacides libres et des autres composés de faible poids moléculaire ; et (g) un séchage par atomisation.

8. Le procédé selon la revendication 7, **caractérisé en ce que** l'hydrolyse est effectuée en employant des protéases de pancréas de porc.

9. Le procédé selon la revendication 8, **caractérisé en ce que** la concentration en protéases de pancréas de porc est d'environ 4 % (m/v).

10. Le procédé selon la revendication 8, **caractérisé en ce que** les protéases de pancréas de porc comprennent une activité de trypsine de 10 à 20x10⁻³ µg de p-nitroanilide/min/mg de protéine et une activité de chymotrypsine de 3 à 6 x10⁻³ µg de p-nitroanilide/min/mg de protéine.

11. Le procédé selon la revendication 8, dans lequel l'hydrolyse de protéine de soja est effectuée à un pH de 8 et à 50 °C pendant 6 heures en agitant de manière continue.

12. Le procédé selon la revendication 8, dans lequel la réaction des hydrolysats avec les esters méthyliques des aminoacides à chaîne ramifiée, est effectuée à un pH de 7 à 37 °C pendant 3 heures.

13. L'utilisation d'hydrolysats de protéine de soja modifiés par voie enzymatique comportant des aminoacides à chaîne ramifiée liés par covalence, pour la production d'une composition destinée à être incorporée en tant que source d'azote dans des compositions d'assistance nutritionnelle par voies entérale et parentérale pour l'homme.

14. L'utilisation d'hydrolysats de protéine de soja modifiés par voie enzymatique comportant des aminoacides à chaîne ramifiée liés par covalence, pour la production d'une composition destinée à être incorporée en tant que source d'azote dans des compositions d'assistance nutritionnelle par voies entérale et parentérale pour les patients cirrhotiques et souffrant d'un stress métabolique.

15. L'utilisation d'hydrolysats de protéine de soja modifiés par voie enzymatique comportant des aminoacides à chaîne ramifiée liés par covalence, pour la production d'une composition destinée à être incorporée en tant que source d'azote dans des compositions d'assistance nutritionnelle par voies entérale et parentérale pour les patients atteints d'encéphalopathie hépatique.

16. L'utilisation d'hydrolysats de protéine de soja modifiés par voie enzymatique comportant des aminoacides à chaîne ramifiée liés par covalence, pour la production d'une composition pour le rétablissement du rapport BCAA:AAA (3:1) dans le plasma.
